Europäisches Patentamt

European Patent Office

Office européen des brevets

(11) Publication number: **0 299 022**
**B1**

# EUROPEAN PATENT SPECIFICATION

(45) Date of publication of patent specification: **05.09.90**

(51) Int. Cl.⁵: **C 08 L 27/06, C 08 J 3/20**

(21) Application number: **88900857.9**

(22) Date of filing: **21.01.88**

(86) International application number:
**PCT/NO88/00007**

(87) International publication number:
**WO 88/05451 28.07.88 Gazette 88/17**

(54) A POLYVINYL CHLORIDE COMPOSITION AND A METHOD OF MANUFACTURING SAID COMPOSITION.

(30) Priority: **21.01.87 GB 8701268**

(43) Date of publication of application:
**18.01.89 Bulletin 89/03**

(45) Publication of the grant of the patent:
**05.09.90 Bulletin 90/36**

(84) Designated Contracting States:
**AT BE CH DE FR GB IT LI LU NL SE**

(56) References cited:
**EP-A-00 239 63**
**WO-A-40/2530**
**US-A-4 122 060**

(73) Proprietor: **NORSK HYDRO A.S.**
**Bygdoy Allé 2**
**N-0257 Oslo 2 (NO)**

(72) Inventor: **NEISH, Margaret, Anne**
**131 Brinkburn Road Darlington**
**Durham DL3 6EA (GB)**
Inventor: **LAWRENCE, Richard, Andrew**
**1 Dale Close Hurworth**
**Darlington Durham DL2 2EN (GB)**

(74) Representative: **Allen, Oliver John Richard et al**
**Lloyd Wise, Tregear & Co. Norman House**
**105-109 Strand**
**London, WC2R 0AE (GB)**

Courier Press, Leamington Spa, England.

**Description**

This invention relates to compounding of polyvinyl chloride and particularly to the preparation of a new polyvinyl chloride compound.

A polyvinyl chloride compound is based on polyvinyl chloride resin and contains various additives such as stabilisers, fillers and impact modifiers in amounts which will yield the correct balance of properties required by the processor to whom it is supplied. It may be supplied in the form a powder blend of polyvinyl chloride resin and additives, but is more commonly supplied in a granulated form.

Suspension polyvinyl chloride (PVC) is normally considered as an amorphous polymer but it is known to contain 5—10% crystallinity. The PVC possesses various levels of morphology and the powder particles, visible to the naked eye, are referred to as grains which are approximately 100—150 µm in size. Each grain is an assembly of primary particles of approximately 1 µm in diameter. In simplistic terms, during the compounding process heat and shear are applied to the PVC resin and additives in order to break down the original PVC grains into the smaller primary particles and to enable these entities to fuse together to form a continuous matrix containing a distribution of the additives.

As the temperature is increased polyvinyl chloride chains are freed and become mobile, and on subsequent cooling these are able to form a more ordered structure. This ordering is referred to as secondary crystallinity. The ordered regions enlarge rapidly with increasing temperature and form a network which develops over a narrow range of temperature. The extent of development of the network is referred to as the degree of fusion of the PVC. At high fusion levels the network extends throughout the polyvinyl chloride matrix producing a highly elastic melt.

As the processing temperature is increased the mechanical properties of compounded polyvinyl chloride improve, for example, the impact and tensile strengths are increased. Some network formation is essential for good mechanical properties, but it is now generally accepted that impact properties pass through a maximum at high processing temperatures. At this point it is believed that there is total destruction of the primary particles resulting in a glassy matrix. In practice, however, this point is seldom reached during the commercial compounding and extrusion processing of PVC compositions.

The morphological changes which occur within the polyvinyl chloride during the compounding process depend on the level of shear involved. A high shear process will cause breakdown of the grains to primary particles before the network is formed by secondary crystallisation. In a low shear process the primary particles may disappear before the grain boundaries. Although, as was explained above, the network of secondary crystallites will develop rapidly over a narrow range of temperature, the extent of the development of the network, i.e. the degree of fusion, will normally be enhanced by a high shear process.

The degree of fusion may be estimated by several methods, however, three methods are commonly employed. Firstly, a rheological method whereby a sample of the material, at a controlled temperature, is forced through a die at constant speed. The pressure required to force the sample through the die is related to the degree of fusion of the sample. The greater the degree of fusion of the sample then the higher the recorded pressure. For example, using a Macklow-Smith Rheometer, the recorded pressure for an unplasticised PVC compound may range from 180—320 kg/cm$^2$ (using a piston speed of 70 mm/min). The technique is described in A GONZE, PLASTICA VOL 24, Page 49, 1971.

A second method of measuring fusion of a compound is by the visual technique of light microscopy. A granule of the material is swollen in the solvent acetone (a poor solvent for PVC) before being sheared and examined under the microscope.

Any weak bonds holding the compound together are broken down, but the highly ordered secondary crystallinity present is not destroyed. The degree of fusion is assessed from the size of the structures observed; the larger the size of the structures then the greater the fusion level of the compound. For an unplasticised PVC compound the size of the fused structures range from approximately 5 × 5 µm for a poorly fused sample up to as large as 400 × 600 µm for a well fused sample. This measuring technique is described in D. A. HEMSLEY, R. P. HIGGS, and A. MIADONYE, POLYMER COMMUNICATIONS, VOL 24, page 103, 1983.

Finally, the degree of fusion of a compound may be determined by thermal analysis, a technique whereby the amount of secondary crystallinity may be measured. The heat required to melt the crystallites is found from the area of the melting peak and this is directly related to the degree of fusion of the sample. Typically for an unplasticised PVC compound the heat required to melt the crystallites $\Delta H_A$ is in the range 0.5—12.0 J/g of PVC. The thermal analysis technique is described in M. GILBERT, D. A. HEMSLEY, and A. MIADONYE, PLAST. RUBB. PROCESSING AND APPLICATIONS, VOL 3, Page 343, 1983.

Generally the main requirements for the compounded PVC upon extrusion are that it should combine good mechanical properties with good extrusion behaviour and surface finish quality.

To achieve good mechanical properties the network of secondary crystallites has to be well developed. However, this enhances the elastic memory of the material and increases the size of the regions of secondary crystallinity which, in the case of unplasticised PVC, causes surface roughness upon extrusion. Furthermore, the energy required to extrude a compound rises as the degree of fusion increases making the extrusion process more expensive. Consequently, polyvinyl chloride must be compounded to an intermediate level whereby a compromise between good extrusion behaviour and acceptable mechanical properties is achieved.

Polyvinyl chloride has traditionally been compounded by two methods. Firstly, a high shear batch mixer followed by, two roll mills which compound the material and form it into a sheet which is subsequently cooled and diced. A very homogeneous compound is usually produced by this method. However, since this is a semi-batch process it is very labour intensive.

The problems associated with the milling method of compounding, especially the fact that it is a semi-batch process with high labour costs, have meant that compounding PVC is now generally carried out using continuous compounders. In this continuous process the dryblend is melted and fused by the action of a screw or screws within the heated compounder barrel before being forced through a die and cut into granules.

In these conventional methods of compounding it is difficult to control the degree of fusion because the process is carried out within the narrow range of temperature over which the network develops rapidly. In this region only slight changes in temperature yield compound of widely differing levels of fusion. The degree of fusion is more difficult to control in the continuous process than in the semi-batch method because of small variations in temperature and shear across the screw/barrel which are inherent in the compounder design. The processor will therefore be supplied with a compound which may well produce articles of varying quality.

Therefore, when compounding polyvinyl chloride by traditional methods careful control is needed to produce a homogeneous mix of a specific level of fusion whereby good extrusion behaviour and the desired mechanical and physical properties will be attained on subsequent processing by the manufacturer. Typically, for unplasticised PVC, this specific degree of fusion is normally of an intermediate level. At this level of fusion the fused structures (i.e. regions of secondary crystallinity), as observed by the microscopy technique, are regular in shape and approximately 50 μm in size. Structures of this size and shape ensure that the compound will exhibit good extrusion behaviour and yield an extrudate of acceptable surface finish quality. Unfortunately, at these intermediate levels of fusion the optimum physical properties are not always achieved (i.e. for unplasticised PVC compounds). Therefore, in practice with conventional compounders it is difficult to achieve the correct compromise and optimum properties are attained infrequently.

To achieve a PVC compound with optimum mechanical properties the network of secondary crystallites must be well developed. Compounding would then be occuring in a temperature range where network development is almost complete and thus proceeds further at a slow rate. Consequently, a polyvinyl chloride compound of a very homogeneous fusion level would be achieved. However, as explained above, this type of product will be difficult to extrude due to the highly elastic melt produced (the elasticity resulting from the large developed regions of secondary crystallinity).

At a high level of fusion the fused structures, as observed by the optical microscopy technique of acetone swelling and shearing, have a higher aspect ratio and are greater than $100 \times 200$ μm in size. For good surface finish extrudate, it has been found that these structures should be regular in shape and preferably 10—40 μm in size, although, structures as large as 100 μm in size can be acceptable. These smaller sized structures must however, retain an inherent high degree of order i.e. secondary crystallinity.

In addition to the requirement for a homogeneous mix at a specific level of fusion it is obviously important that the compounded polyvinyl chloride should contain a good dispersion of additives. The morphological effects arising from the particulate structure of the polymer mean that polyvinyl chloride differs from most other polymers in that the properties of the final products are more critically dependent on the additives used, the processing equipment and the interaction between the two.

The object of the present invention is to produce a PVC compound granulate which not only exhibits optimum mechanical properties, but also yields good surface finish upon extrusion and to provide a method by which to produce this superior compound.

According to one aspect of the invention a method of manufacture of a polyvinyl chloride compound comprises preparing a blend of polyvinyl chloride resin and additives, introducing the blend into a compounding machine in which the blend is melted and fused to a high degree and then immediately reducing the size of the fused structures in the polyvinyl chloride compound by the use of an intensive mixing device.

The advantage of this is that by controlling the size of the highly fused regions of secondary crystallinity optimum mechanical properties are achieved but good extrusion behaviour is still exhibited by the compound.

The intensive mixing device ensures that there is a homogeneous mix of both the additives and fusion level in the compound.

Preferably the intensive mixing device is capable of repeatedly sub-dividing and re-mixing the fused structures in the polyvinyl chloride melt in such a manner as to cause a size reduction of the fused structures to preferably 10—100 μm, more preferably 10—40 μm, in size.

Normally, a highly fused polyvinyl chloride granulate with a high degree of fusion would yield an unacceptable extrusion performance due to the size of the fused structures being in excess of 100 μm. By reducing the size of the fused structures to less than 100 μm by the action of the intensive mixing device good extrusion behaviour is achieved.

Preferably the conditions in the compounding machine and intensive mixing device are controlled so that the compound has a degree of fusion of at least $\triangle H_A = 4.5$ Joules per gramme of polyvinyl chloride as measured by the Thermal Analysis technique. Suitably these conditions are applied when rigid polyvinyl chloride is to be compounded.

Alternatively the conditions in the compounding machine and intensive mixing device are controlled so that the compound has a degree of fusion of at least $\triangle H_A = 3.5$ Joules per gramme of polyvinyl chloride as measured by the Thermal Analysis technique. Suitably these conditions are applied when flexible polyvinyl chloride is to be compounded.

Suitably the intensive mixing device is a Cavity Transfer Mixer which is described in the specification of GB Patent No 930 939.

According to another aspect of the invention a polyvinyl chloride compound comprises polyvinyl chloride resin and additives, having a degree of fusion of at least $H_A = 3.5$ Joules per gramme of polyvinyl chloride as measured by the Thermal Analysis Technique, fused structures which are homogeneous in shape and 10—100 µm in size and a homogeneous dispersion and distribution of additives.

The combination of a high degree of fusion and small size of fused structures results in a polyvinyl chloride compound which has excellent mechanical properties and good extrusion behaviour.

Suitably the additives may be stabilisers, lubricants, impact modifiers, process aids, fillers and pigments.

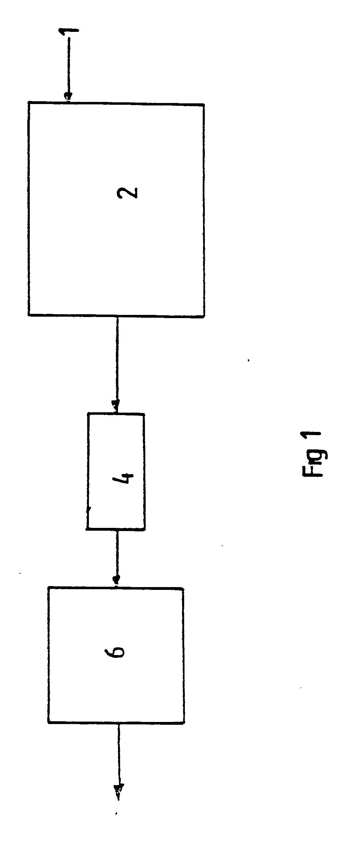

The invention will now be further described by way of example with reference to the accompanying drawing which is a schematic representation of the steps of a method in accordance with the invention.

In order to prepare a compound of polyvinyl chloride, a blend 1 of polyvinyl chloride resin additives is introduced into a compounding machine 2 which has a suitable intensive mixing device 4 fitted to its output end as shown schematically in the Figure.

The mixing device should be able to physically reduce the size of the highly fused regions of secondary crystallinity by repeatedly sub-dividing and re-mixing the fused structures into relatively small structures (ideally, ~ 10—40 µm in size), but without altering the initial high degree of fusion of the material. The device should also be a distributive as well as a dispersive mixer for PVC, in order that a homogeneous mix, both of fusion level and additives, is attained. The preferred intensive mixing device is a Cavity Transfer Mixer which was developed by RAPRA Technology Ltd for the distribution of masterbatch in polyethylene compounds and is described in the specification of GB Patent No 930939. The processing conditions for compounding are dependent on the type of compounder employed and the compound formulation. In general, the barrel zone temperatures of the compounder and other process conditions, e.g. the screw speed of the compounder are set so that the melt produced reaches a temperature between 120°C and 210°C. The resultant melt is forced through a die attached to the exit of the mixing device 4 and subsequently chopped and cooled by a pelletising assembly 6.

To ensure that these smaller PVC structures do not recombine and are, in fact, retained in the final product, the specialised mixing action must occur at a late stage in the compounding process.

The polyvinyl chloride compound may be produced from either rigid or flexible polyvinyl chloride.

The compounded PVC, which may include stabilisers, lubricants, impact modifiers, process aids, fillers and pigments, produced by the method is highly fused, having a fusion level $\triangle H_A \geqslant 3.5$ J/g of PVC when flexible PVC is compounded and $\triangle H_A = \geqslant 4.5$ J/g of PVC when rigid PVC is compounded, as measured by the Thermal Analysis method of determining fusion level. The new product has fused structures which are homogeneous in shape and are in the size range 10—40 µm (as determined by such methods as the optical microscopy method of acetone swelling and shearing). This size of structure is much smaller than expected for this level of fusion; normally structures in the size range of 100—200 µm are attained. Finally, the new product has excellent distribution as well as dispersion of additives, as determined by optical microscopy methods.

The manufacturer who further processes the polyvinyl chloride compound will find that the PVC compound which is preferably provided as a granulate is atypical being very homogeneous as regards fusion level, as well as regards dispersion and distribution of additives. The compound as prepared by the method, is fused to a high degree which results in the end product having optimum mechanical properties, i.e. high impact and tensile strengths.

Moreover good extrusion behaviour of the compound is exhibited as a result of the regular sized fused structures, of approximately 10—40 µm in size, present in the melt. Normally, using traditional continuous compounding equipment a highly fused PVC compound would yield an unacceptable extrusion performance due to the size of the fused structures being in excess of 100 µm (as determined by the optical microscopy method of acetone swelling and shearing) giving rise to a highly elastic melt. Consequently, previously, only a compromise between optimum mechanical properties and good extrusion behaviour of the end product could be achieved.

The PVC compound overcomes the shortcomings of previous compounds.

The example which follows is intended to illustrate in a non-limiting manner the results of compounding polyvinyl chloride by the method of the present invention.

## Example

A rigid PVC compound was prepared from approximately 75% polyvinyl chloride resin, 11% calcium carbonate filler, plus titanium dioxide and other conventional additives. This compound was prepared by two different methods:

4

## Method 1

A counter rotating intermeshing twin-screw extruder with a screw diameter of 50 mm was used in a conventional fashion to prepare samples 'A' and 'B' of different fusion levels. The conditions were chosen such that sample 'A' possessed what would be termed a medium/low degree of fusion (gelation) while sample 'B' possessed a high degree of fusion.

## Method 2

An identical extruder to that employed in Method 1 was fitted with a Cavity Transfer Mixer. The mode of action of the CTM complies with the requirements set out above for a suitable intensive mixing device. This modified extruder was then used, employing the same compounding conditions as in Method 1, to prepare samples 'C' and 'D'.

All of the PVC compounds produced were then extruded using a 30 mm diameter single screw extruder of the type commonly used in the manufacture of articles from compounded PVC.

The results are shown in Table 1 for Method 1 and Table 2 for Method 2.

The control sample 'A' with a low-medium degree of fusion, although giving a satisfactory extrusion surface finish, displayed mechanical properties which were not fully developed. On the other hand the control sample 'B' with a high degree of fusion developed better mechanical properties on extrusion, but due to the highly elastic nature of the compound the surface finish was unacceptable.

Samples 'C' and 'D', compounded by the method of the present invention, both appear to be compounded to a high fusion level (as measured by the Rheometry and DSC methods) despite the differing compounding conditions used. These highly fused samples yield extrudates which exhibit excellent mechanical properties compared to the conventionally compounded samples, even a sample of similar fusion level (i.e. sample 'B'). However, qualitative evaluation of the extruded products demonstrate an improvement in the surface finish of samples 'C' and 'D' over the extrudate of the highly fused compound (sample 'B') produced by the conventional compounding technique.

Microscopic evaluation of the highly fused samples (i.e. samples 'C' and 'D') prepared by Method 2 reveal that the fused structures are very regular in both shape and size. These fused structures are almost square in shape and are approximately 30 μm in size. Unlike the highly fused sample prepared by Method 1 (i.e. sample 'B') where the fused structures are a much larger size (approximately 100—150 μm) and are rather irregular in shape.

This reduction in elastic memory observed for the samples prepared by Method 2 ('C' and 'D') is also evidenced by the reduction in pellet diameter compared with the highly fused sample 'B' prepared by Method 1.

| TABLE 1 | | | | | | | | | |
|---|---|---|---|---|---|---|---|---|---|
| SAMPLE REFERENCE | COMPOUNDING CONDITIONS | | | | DEGREE OF FUSION BY | | EXTRUDATE PROPERTIES | | |
| | BARREL TEMPERATURES, °C | | | SCREW SPEED | CAPILLARY RHEOMETER PRESSURE | DSC | SURFACE FINISH QUALITY | TENSILE BEHAVIOUR | | NOTCHED CRAFT IMPACT STRENGTH $kJm^{-2}$ |
| | ZONE 1 | ZONE 2 | ZONE 3 | rpm | $kgcm^{-2}$ | $Jg^{-1}$ of PVC | | TENSILE STRENGTH MPa | ELONGATION AT YIELD % | |
| A | 138 | 147 | 145 | 27 | 206 | 1,62 | GOOD | 33,81 | 40 | 14,56 |
| B | 162 | 170 | 170 | 11 | 241 | 6,86 | POOR | 35,10 | 14 | 15,63 |

| TABLE 2 | | | | | | | | | |
|---|---|---|---|---|---|---|---|---|---|
| SAMPLE REFERENCE | COMPOUNDING CONDITIONS | | | | DEGREE OF FUSION BY | | EXTRUDATE PROPERTIES | | |
| | BARREL TEMPERATURES, °C | | | SCREW SPEED | CAPILLARY RHEOMETER PRESSURE | DSC | SURFACE FINISH QUALITY | TENSILE BEHAVIOUR | | NOTCHED CRAFT IMPACT STRENGTH $kJm^{-2}$ |
| | ZONE 1 | ZONE 2 | ZONE "CIM" | rpm | $kgcm^{-2}$ | $Jg^{-1}$ of PVC | | TENSILE STRENGTH MPa | ELONGATION AT YIELD % | |
| C | 139 | 149 | 147 | 27 | 241 | 5,54 | GOOD | 36,23 | 61 | 18,89 |
| D | 169 | 172 | 170 | 11 | 249 | 6,17 | GOOD | 35,51 | 64 | 18,01 |

## EP 0 299 022 B1

### Claims

1. A polyvinyl chloride compound comprising polyvinyl chloride resin and additives, having a degree of fusion of at least $\triangle H_A = 3,5$ Joules per gramme of polyvinyl chloride as measured by the Thermal Analysis Technique, fused structures which are homogeneous in shape and a homogeneous dispersion and distribution of additives.

2. A polyvinyl chloride compound as claimed in claim 1 wherein the additives may be stabilisers, lubricants, impact modifiers, process aids, fillers and pigments.

3. A method of manufacture of a polyvinyl chloride compound according to claims 1—2, comprising preparing a blend of polyvinyl chloride resin and additives, introducing the blend into a compounding machine wherein a melt temperature of 120—210°C is attained and the blend is melted and fused to a high degree and then immediately reducing the size of the fused structures in the polyvinyl chloride compound by intensive mixing for repeatedly sub-dividing and re-mixing the fused structures in the polyvinyl chloride melt until a size reduction of the fused structures in the polyvinyl chloride melt to approximately 10—100 µm in diameter is attained.

4. A method according to claim 3 wherein the intensive mixing continues till a size reduction of the fused structures in the polyvinyl chloride melt to 10—40 µm is attained.

5. A method according to claim 3 comprising further forming the melt into a rod by a die subsequent to the intensive mixing and cooling and chopping the rod to form granules of the polyvinyl chloride compound.


### Patentansprüche

1. Polyvinylchloridverbindung, bestehend aus einem Polyvinylchloridharz und Zusatzstoffen mit einem Schmelzgrad von mindestens $\triangle H_A = 3,5$ Joule je Gramm an Polyvinylchlorid nach Messung mittels Thermoanalyse, verschmolzenen Strukturen homogener Gestalt und der Größe 10—100 µm, und einer homogenen Dispersion und Verteilung der Zusatzstoffe.

2. Polyvinylchloridverbindung nach Anspruch 1, worin es sich bei den Zusatzstoffen um Stabilisatoren, Gleitmittel, Schlagfestmacher, Verarbeitungshilfsmittel, Füllstoffe und Pigmente handeln kann.

3. Verfahren zur Herstellung einer Polyvinylchloridverbindung nach Ansprüchen 1—2, wobei man eine Mischung aus Polyvinylchloridharz und Zusatzstoffen herstellt, die Mischung einem Kompound-Mischer zuführt, worin eine Schmelztemperatur von 120—210°C erreicht wird und die Mischung zu fließen beginnt und weitgehend schmilzt, sofort danach die Größe der verschmolzenen Strukturen in der Polyvinylchloridverbindung durch intensives Mischen zwecks wiederholter Unterteilung und erneuter Mischung der verschmolzenen Strukturen in der Polyvinylchloridschmelze reduziert, bis man zu einer Zerkleinerung der verschmolzenen Strukturen in der Polyvinylchloridschmelze auf einen Durchmesser von etwa 10—100 µm in gelangt.

4. Verfahren nach Anspruch 3, worin man das intensive Mischen weiterführt, bis man zu einer Zerkleinerung der verschmolzenen Strukturen in der Polyvinylchloridschmelze auf 10—40 µm gelangt.

5. Verfahren nach Anspruch 3, wobei man weiterhin die Schmelze nach dem intensiven Vermischen mittels einer Düse zu einem Stab formt, kühlt, und den Stab zu einem Granulat der Polyvinylchloridverbindung schneidet.


### Revendications

1. Composé de poly(chlorure de vinyle) comprenant une résine de poly(chlorure de vinyle) et des additifs, ayant un degré de fusion d'au moins $\triangle H_A = 3,5$ Joules par gramme de poly(chlorure de vinyle), mesuré par la technique d'analyse thermique, des structures fusionnées qui sont de forme homogène et de dimension 10—100 µm et une dispersion et une distribution homogènes des additifs.

2. Composé de poly(chlorure de vinyle) selon la revendication 1, dans lequel les additifs peuvent être des stabilisants, des lubrifiants, des modificateurs de choc, des auxiliaires de mise en oeuvre, des charges et des pigments.

3. Procédé de fabrication d'un composé de poly(chlorure de vinyle) selon les revendications 1—2, comprenant la préparation d'un mélange de résine de poly(chlorure de vinyle) et d'additifs, l'introduction du mélange dans une machine à mélanger dans laquelle on atteint une température de la masse en fusion de 120—210°C et le mélange est fondu et fusionné à un degré élevé, puis la réduction immédiate de la taille des structures fusionnées dans le composé de poly(chlorure de vinyle) par malaxage intensif pour subdiviser et remélanger de façon répétée les structures fusionnées dans la masse fondue de poly(chlorure de vinyle) jusqu'à ce que l'on atteigne une réduction de taille des structures fusionnées dans la masse fondue de poly(chlorure de vinyle) jusqu'à environ 10—100 µm de diamètre.

4. Procédé selon la revendication 3, dans lequel le malaxage intensif se poursuit jusqu'à ce que l'on atteigne une réduction de taille des structures fusionnées dans la masse fondue de poly(chlorure de vinyle) jusqu'à 10—40 µm.

5. Procédé selon la revendication 3, comprenant en outre la formation de la masse fondue en une tige par une filière après le malaxage intensif et le refroidissement et le découpage de la tige pour former des granulés du composé de poly(chlorure de vinyle).

8

Fig 1